Europäisches Patentamt

(19) European Patent Office

Office européen des brevets

(11) Publication number: **0 116 614**

**B1**

(12) **EUROPEAN PATENT SPECIFICATION**

(45) Date of publication of patent specification: **04.02.87**

(51) Int. Cl.⁴: **C 08 G 59/20, C 08 L 63/04**

(21) Application number: **83902774.5**

(22) Date of filing: **04.08.83**

(86) International application number:
**PCT/US83/01195**

(87) International publication number:
**WO 84/00767 01.03.84 Gazette 84/06**

(54) **COATING COMPOSITIONS CONTAINING A HYDROLYZED EPOXY NOVOLAC RESIN.**

(30) Priority: **16.08.82 US 408352**

(43) Date of publication of application:
**29.08.84 Bulletin 84/35**

(45) Publication of the grant of the patent:
**04.02.87 Bulletin 87/06**

(84) Designated Contracting States:
**CH DE FR GB LI NL SE**

(56) References cited:
**US-A-3 405 093**
**US-A-3 632 836**
**US-A-3 787 508**
**US-A-3 891 525**
**US-A-3 991 028**
**US-A-4 145 324**
**US-A-4 340 713**

The file contains technical information
submitted after the application was filed and
not included in this specification

(73) Proprietor: **THE DOW CHEMICAL COMPANY**
**2030 Dow Center Abbott Road P.O. Box 1967**
**Midland, MI 48640 (US)**

(72) Inventor: **CAVITT, Michael, Brent**
**303 South Yaupon**
**Lake Jackson, TX 77566 (US)**
Inventor: **MOORE, Charles, Harvey**
**207 Marigold**
**Lake Jackson, TX 77566 (US)**

(74) Representative: **Hann, Michael, Dr. et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

## Description

The present invention relates to room temperature curable expoxy novolac resin coating compositions containing a partially hydrolyzed epoxy novolac resin.

Walker in US—A—3 632 836 and US—A—3 787 508 discloses the use of fully hydrolyzed epoxy resins in epoxy resin coatings up to an amount of 20 percent by weight to improve the reactivity of the epoxy resin and to improve pigment dispersibility in the epoxy resin coating composition.

Irwin in US—A—3 891 525 and US—A—3 991 028 discloses the use of hydrolyzed epoxy resins in water dispersed electrodepositable coating compositions employing an interpolymer of a hydroxyalkyl ester of an unsaturated acid and an amine-aldehyde resin.

Irwin et al in US—A—4 145 234 disclose coating formulations of (1) an oil in water emulsion of a solution of a hydrolyzed diglycidyl ether of a bisphenol, a nonionic surfactant and a curing agent; or (2) a solution of a hydrolyzed diglycidyl ether of a bisphenol and a curing agent in alkoxyethanol or a mixture of alkoxyethanol with alcohols, ketones, carbitols or their acetates and, optionally, liquid aromatic hydrocarbon solvents. Such solution coating compositions are stated to have solid (non-volatile) content of from 15 to 35 weight percent.

It is the object of the present invention to provide an epoxy novolac resin which is compatible with mixtures of amides or amines as curing agents in a coating composition instead of a blend of fully hydrolyzed with non-hydrolyzed polyepoxides.

This object is solved by using a partially hydrolyzed epoxy novolac resin wherein from 3 to 50% of the epoxy groups have been hydrolyzed in a coating composition.

The present invention concerns a coating composition which is curable at temperatures less than 35°C which comprises

(1) an epoxy resin;

(2) a curing amount of at least one curing agent for component (1) selected from polyamides, primary amine compounds and secondary amine compounds; and

(3) a sufficient quantity of a suitable solvent system so as to provide the coating composition with a suitable application viscosity; characterized in that component (1) is at least one hydrolyzed epoxy novolac resin having an average epoxide functionality before hydrolysis of from 2.01 to 10, preferably from 2.2 to 5 and wherein from 3 to 50, preferably from 5 to 20 percent of the epoxy groups have been hydrolyzed.

It has now been discovered that one or more of the properties of room temperature coatings prepared from epoxy novolac resins can be improved by hydrolyzing at least a portion of the epoxy groups of said novolac resin.

Any epoxy novolac resin when at least partially hydrolyzed, can be employed in the present invention. Suitable such epoxy novolac resins, before hydrolysis are disclosed, for example, in *Handbook of Epoxy Resins* by Lee and Neville, McGraw-Hill, 1967.

Any process can be employed to hydrolyze the epoxy novolac resins employed in the present invention such as those methods disclosed by Walker in US—A—3 632 836, US—A—3 405 093 and US—A—3 787 508.

A particularly suitable process for hydrolyzing the epoxy resins employed in the present invention comprises reacting the epoxy resin with water in the absence of substantial quantities of an organic solvent in the presence of catalytic quantities of a combination catalyst comprising (1) at least one dicarboxylic acid and (2) a phosphonium compound wherein components (1) and (2) are present in a molar ratio of from 1:1 to 20:1, preferably from 3:1 to 10:1, most preferably from 5:1 to 7:1, respectively.

Suitable dicarboxylic acids which can be employed herein include those having from 2 to 10, preferably from 2 to 6, most preferably from 2 to 4, carbon atoms, such as, for example, oxalic acid, malonic acid, succinic acid, glutaric acid, adipic acid, pimelic acid, suberic acid, azelaic acid, sebacic acid, and mixtures thereof. Also suitable are the hydrates of the aforementioned acids.

Suitable phosphonium catalysts which can be employed with the dicarboxylic acid for hydrolyzing the epoxy resins include, for example, those disclosed by Perry in US—A—3 948 855 or by Dante in US—A—3 477 990. Particularly suitable phosphonium catalysts include, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate acetic acid complex), tetrabutylphosphonium chloride, tetrabutylphosphonium bromide, tetrabutylphosphonium iodide, tetrabutylphosphonium acetate and tetrabutylphosphonium diacetate (tetrabutylphosphonium acetate acetic acid complex). The total quantity of catalyst varies depending upon the conditions employed, but is advantageously from 0.001 to 0.01, preferably from 0.003 to 0.008 moles of total catalyst per epoxide equivalent contained in the resin or resins to be hydrolyzed. Higher quantities can be employed, but no beneficial results are obtained.

The hydrolysis process is conducted at temperatures of from 50°C to 200°C, preferably from 110°C to 150°C for a period of time to each the desired degree of hydrolysis.

The amount of water employed is dependent upon the desired degree of hydrolysis, but usually from 0 to 100, preferably from 0 to 30, most preferably from 0 to 5 percent in excess of the theoretical amount of water required for hydrolysis is employed.

2

Suitable primary and secondary amine curing agents which can be employed in the coating compositions of the present invention include aliphatic primary and secondary amines such as, for example, ethylenediamine, 1,3-propane diamine, 1,4-butane diamine, 1,5-pentane diamine, 1,6-hexane diamine, diethylenetriamine, triethylenetetramine, tetraethylenepentamine, bis(hexamethylene)triamine, aminoethylethanolamine, dimethylaminopropylamine, diethylaminopropylamine, methylimino-bispropylamine, menthane diamine, 1,3 - diaminocyclohexane, N - aminoethyl piperazine, isophoronediamine, diethanolamine, methylethanolamine, ethylethanolamine, dimethylamine, diethylamine, methylethylamine, methyl-n-propylamine, piperidine, morpholine; aromatic polyamines such as, for example, m-phenylenediamine, 4,4'-methylenedianiline, diaminodiphenylsulfone, 2,4-toluenediamine, o-phenylenediamine and mixtures thereof.

Also suitable as curing agents are polyamides, particularly fatty polyamides.

Most of these and other curing agents are described in the aforementioned *Handbook of Epoxy Resins.*

Suitable solvents which can be employed herein include, for example, ketones such as acetone and methyl ethyl ketone; glycol ethers such as butylene glycol methyl ether, diethylene glycol n-butyl ether, diethylene glycol ethyl ether, diethylene glycol methyl ether, dipropylene glycol methyl ether, ethylene glycol n-butyl ether, ethylene glycol methyl ether, ethylene glycol phenyl ether, propylene glycol methyl ether, and tripropylene glycol methyl ether; glycol esters such as ethylene glycol monoethyl ether acetate, ethylene glycol monobutyl ether acetate, and ethylene glycol monomethyl ether acetate; and mixtures of the above with aromatic hydrocarbons such as, for example, toluene and xylene.

The following examples are illustrative of the invention, but are not to be construed as to limiting the scope thereof in any manner.

The following components were employed in the examples.

Catalyst A is a 70 weight percent solution of ethyltriphenyl phosphonium acetate · acetic acid complex in methanol.

Catalyst B is oxalic acid · $2H_2O$.

Epoxy esin A is a phenol-formaldehyde epoxy novolac resin having an average epoxide functionality of 3.6 and an average EEW of 181.

Curing Agent A is a reaction product of a polyfunctional carboxylic acid and a polyalkylenepolyamine with an amine hydrogen equivalent weight of 170 commercially available from Henkel Corp. under the trade name of VERSAMID 115®.

Curing Agent B is a polyalkylenepolyamine with an amine hydrogen equivalent weight of 24.4.

The following components were employed to evaluate coating performance on cold rolled steel panels using the resin examples.

Coating Formulation A was made up of two parts. Part 1 contained the resin and Part 2 contained the curing agent. Part 1 and 2 were mixed and given an induction time of one hour (3600 s) at 25°C. At the end of one hour (3600 s), the coating was made. Part 1 was composed of 100 parts resin, 72 parts methyl isobutyl ketone, 37 parts of the methyl ether of propylene glycol and 1.7 parts of a urea-formaldehyde resin that is 60 percent nonvolatile (N.V.) in butanol and xylol. Part 2 was composed of 120 parts xylene and 80 parts of curing agent A. All parts were based on mass. This formulation was used to coat steel panels and they were allowed to cure at ambient temperature for 7 days (604,800 s).

Coating Formulation B was made up of 100 parts resin, 109 parts of methyl ethyl ketone, 1.7 parts of an ureaformaldehyde resin that is 60 percent N.V. in butanol and xylol and a stoichiometric amount of curing agent B. All parts were based on mass. When all parts were mixed together, a coating was prepared and allowed to cure at ambient temperature for 7 days (604,800 s).

Coatings made from the epoxy resins were evaluated by the following tests.

MEK double rubs

To the ball end of a 2 lb. (0.9 kg) ball pein hammer was attached a pad of chese cloth composed of 8 plys The pad was saturated with methyl ethyl ketone (MEK) and then rubbed across a coated substrate. A constant back and forth motion is used allowing only the weight of the hammer to apply force on the coating. A back and forth movement counts as one double rub. This motion is continued until the coating is mared and/or begins to be removed by the solvent effect.

Pencil hardness

This procedure can be found in *Paint Testing Manual* by H. A. Gardner and G. G. Sward in the 12th edition (1962) pages 131 and 132. One part was modified. When the coating is broken to the metal surface, that constitutes a failure. The results reported here are a pencil hardness that does not break the film but the next harder pencil grade does break film.

Glacial acetic acid spot test

A coating that has been applied to a substrate and cured such as cold rolled steel can be tested for chemical resistance. In this test glacial acetic acid ($\cong$1 ml) is placed on the coating. A timer is started. When the coating delaminates from the substrate, failure has occurred and the timer stopped. This time that has been recorded is then called time to failure for glacial acetic acid.

3

Examples 1 and 2 and comparative experiments A and B

A 2 liter pressure reactor was charged in order, with 700 g (3.888 epoxy equivalents) of epoxy resin A, 1.3 g (0.002 mole) of catalyst A, 9.60 g (0.533 mole) of water and 2 g (0.016 mole) of catalyst B. The reactor was sealed, purged with nitrogen and left with a 24 psig (165.5 kPa gauge pressure) of nitrogen. The contents were heated to 134°C in 0.57 hour (2052 s) and maintained at 140°C for 1.02 hour (3672 s). The reactor was then heated to 190°C and the temperature maintained at 190°C under a vacuum for 0.5 hour (1800 s). The resultant product had 12 percent of the epoxy groups hydrolyzed.

Coatings were prepared from the hydrolyzed epoxy resin prepared above and compared to the unhydrolyzed epoxy resin. The results are given in the following table.

|  | Example 1 | Comp. Expt. A | Example 2 | Expt. B |
|---|---|---|---|---|
| Epoxy resin | Hydrolyzed Resin A | A | Hydrolyzed Resin A | A |
| Formulation | A | A | B | B |
| Pencil hardness[1] | H | B | F | 4B |
| MEK double rubs | >200 | 90 | >200 | 54 |
| Glacial acetic acid Spot test, seconds | 360 | 180 | N.D.[2] | N.D. |

[1]The values going from poorest to best are: 6B, 5B, 4B, 3B, 2B, B, HB, F, H, 2H, 3H, 4H, 5H and 6H.
[2]N.D.=not determined.

## Claims

1. A coating composition which is curable at temperatures less than 35°C which comprises
(1) an epoxy resin;
(2) a curing amount of at least one curing agent for component (1) selected from polyamides, primary amine compounds, secondary amine compounds or mixtures thereof; and
(3) a sufficient quantity of a suitable solvent system so as to provide the coating composition with a suitable application viscosity; characterized in that component (1) is at least one hydrolyzed epoxy novolac resin having an average epoxide functionality before hydrolysis of from 2.01 to 10 and wherein from 3 to 50 percent of the epoxy groups have been hydrolyzed.

2. The coating composition of Claim 1 characterized in that component (1) has an epoxide functionality, before hydrolysis, of from 2.2 to 5 and has from 5 to 20 percent of its epoxy groups hydrolyzed.

## Patentansprüche

1. Bei Temperaturen unter 35°C härtbare Beschichtungszusammensetzung, enthaltend
(1) ein Epoxyharz,
(2) eine härtende Menge mindestens eines Härtungsmittels für den ersten Bestandteil, ausgewählt aus Polyamiden, primären Aminverbindungen, sekundären Aminverbindungen oder Mischungen derselben und
(3) eine ausreichende Menge eines geeigneten Lösungsmittelsystems, um eine Beschichtungszusammensetzung mit einer brauchbaren Beschichtungsviskosität zu schaffen, dadurch gekennzeichnet, daß der erste Bestandteil mindestens ein hydrolysiertes Epoxynovolackharz mit einer mittleren Epoxyfunktionalität vor der Hydrolyse von 2,01 bis 10 ist, bei dem von 3 bis 50% der Epoxygruppen hydrolysiert sind.

2. Beschichtungszusammensetzung nach Anspruch 1, dadurch gekennzeichnet, daß der erste Bestandteil eine mittlere Epoxyfunktionalität vor der Hyrolyse von 2,2 bis 10 aufweist und von 5 bis 20% der Epoxygruppen hydrolysiert sind.

## Revendications

1. Composition de revêtement, durcissable à des températures de moins de 35°C, qui comprend
(1) une résine époxy,
(2) une quantité durcissante d'au moins un agent de durcissement pour le constituant (1) choisi parmi des polyamides, des amines primaires, des amines secondaires ou leurs mélanges; et
(3) une quantité suffisante d'un système solvant convenable pour donner à la composition de revêtement une viscosité convenable d'application; caractérisée en ce que le constituant (1) est au moins une résine novolaque—époxy hydrolysée ayant une fonctionnalité moyenne d'époxyde, avant hydrolyse, allant de 2,01 à 10 et dans laquelle 3 à 50 pour cent des groupes époxy ont été hydrolysés.

2. Composition de revêtement selon la revendication 1, caractérisée en ce que le constituant (1) a une fonctionnalité d'époxyde, avant hydrolyse, allant de 2,2 à 5 et a de 5 à 20 pour cent de ses groupes époxy hydrolysés.